Europäisches Patentamt

European Patent Office

Office européen des brevets

(19)

(11) Publication number: **0 285 452**
**A2**

(12) # EUROPEAN PATENT APPLICATION

(21) Application number: 88302970.4

(22) Date of filing: 31.03.88

(51) Int. Cl.4: **G 11 B 5/596**

(30) Priority: 31.03.87 JP 77866/87

(43) Date of publication of application:
05.10.88 Bulletin 88/40

(84) Designated Contracting States: DE FR GB

(71) Applicant: **KABUSHIKI KAISHA TOSHIBA**
**72, Horikawa-cho Saiwai-ku**
**Kawasaki-shi Kanagawa-ken 210 (JP)**

(72) Inventor: **Kitamura, Shunji**
**c/o Patent Division 1-1, Shibaura 1-chome**
**Minato-ku Tokyo (JP)**

**Ogawa, Tomihisa**
**c/o Patent Division 1-1, Shibaura 1-chome**
**Minato-ku Tokyo (JP)**

(74) Representative: **Freed, Arthur Woolf et al**
**MARKS & CLERK 57-60 Lincoln's Inn Fields**
**London WC2A 3LS (GB)**

(54) **Magnetic disk apparatus using both servo-surface servo and data-surface servo.**

(57) Disclosed is a magnetic disk apparatus which prepares data-surface positioning information in accordance with a positioning information read out from a servo surface by a servo head (1), and provides a mode of writing the positioning information on a data surface by means of a read/write head.

FIG. 1

EP 0 285 452 A2

## Description

MAGNETIC DISK APPARATUS USING BOTH SERVO-SURFACE SERVO AND DATA-SURFACE SERVO

The present invention relates to a magnetic disk device employing both a servo-surface servo system and a data-surface servo one.

For realizing large capacity of a magnetic disk device, heretofore, there has been known the technique of raising a track density per one surface of a magnetic disk.

In order to raise a track density, it is necessary to achieve high accuracy of positioning a read/write head. For this purpose, it is effective to do tracking control by a closed loop servo system.

The normal magnetic disk apparatus includes a plurality of piled magnetic disks which are concentrically rotated. In the construction, there is often used a servo-surface servo system wherein tracking is controlled by reproducing the positioning information (servo pattern) pre-recorded on an exclusive servo surface specified among recording surfaces.

This system, however, has a tendency to bring about mechanical position slippage on the data surface separated from the servo surface, caused by something like temperature change, so that it is impossible to raise a track density of the device so much.

For raising a track density more by overcoming this shortcoming, there has been developed a data-surface servo system wherein positioning information is recorded on a data surface without having to specify an exclusive servo surface. This system, however, has a shortcoming that a magnetic head cannot be moved at high speed and the access time is made longer because it records position information more discreately than the servo-surface servo system.

Under these circumstances, recently, a new system has been developed wherein a data-surface servo and a servo-surface servo are combined with each other for compensating respective shortcomings.

This system (hereinafter, referred as to a combination servo system) can realize large capacity and high performance of a magnetic disk apparatus, since the positioning accuracy is high and the access time is short. This system, however, also has the following shortcoming.

Namely, this system includes positioning information on the data surface and the servo one pre-written in the assembling steps of this apparatus, so that the data format on the data surface is considerably restricted.

The present invention is made in consideration of the shortcomings described above, and an object of the invention is to enlarge an area to be data-formatted on the data surface in the magnetic disk apparatus for positioning by the combination servo system.

The magnetic disk apparatus of the present invention provides a mode in which positioning information for data surfaces is created on the basis of the positioning information readout from the servo surface by a servo head and then is written on the data surface by a read/write head.

The magnetic disk apparatus of the present invention can write favorable positioning information on the data surface by itself, so that a large area to be data-formatted can be obtained on the data surface.

Fig. 1 is a block diagram showing the arrangement of one embodiment of the present invention;

Fig. 2 is a view showing the state of sector servo data of the above-mentioned embodiment;

Fig.3 is a view showing the ralating between an S-sector pulse and a normal sector pulse of the above-mentioned embodiment;

Fig. 4 is a view showing the ralation between a servo pattern and some factors such as an output signal of the above-mentioned embodiment;

Fig. 5 is a view showing the relation between the servo pattern and the servo head position of the above-mentioned embodiment; and

Fig. 6 is a block diagram showing the arrangement of an essential part of the other embodiment of the present invention.

Now, the embodiment of the present invention will be described in detail with reference to the drawings.

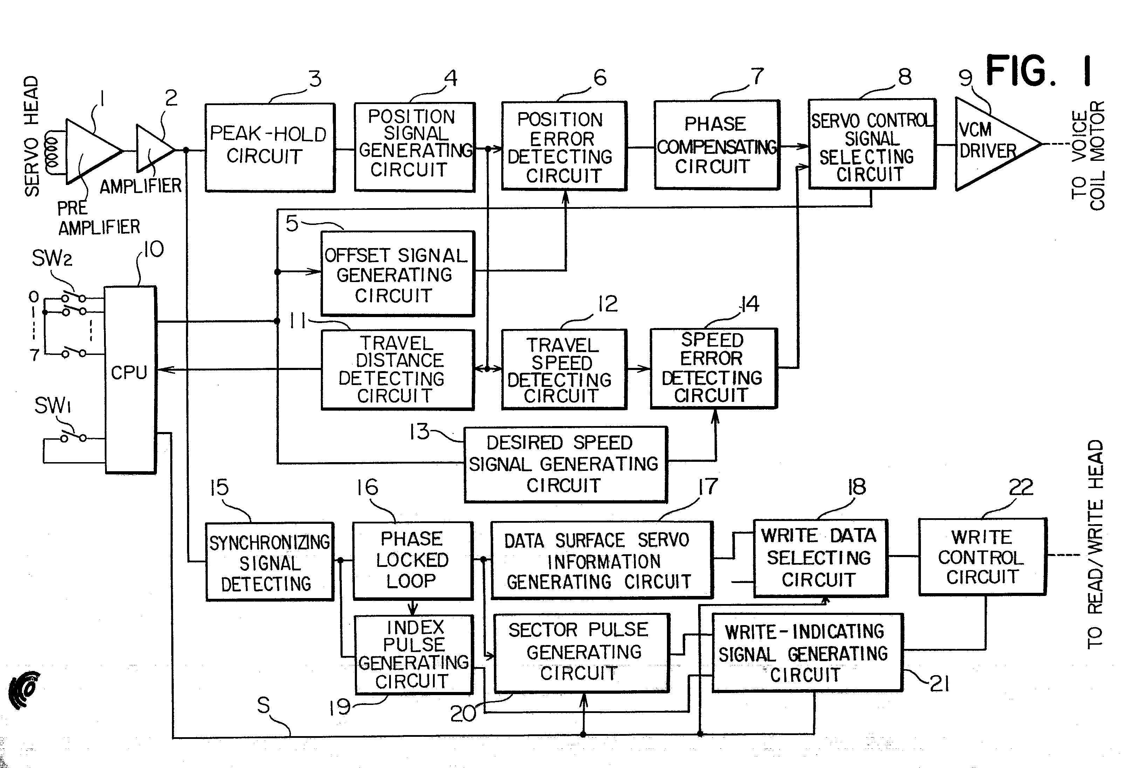

Fig. 1 is a block diagram showing the arrangement of one embodiment of the present invention.

In this figure, numeral 1 denotes a preamplifier for amplifying a signal read out from a servo surface by a servo head, 2 denotes an amplifier for amplifying a signal output by the preamplifier 1, 3 denotes a peak-hold circuit for holding a peak level of a signal output by the amplifier 2, and 4 denotes a position signal generating circuit for generating a signal corresponding to a servo head position on the basis of the peak level-generating timing.

Numeral 5 denotes an offset signal generating circuit for generating an offset signal required for intentionally slipping the servo head position by 1/2 track will be described later, 6 denotes a position error detecting circuit for detecting an error between the slipped position and the present one of the servo head in order to settle the servo head on the position slipped out by 1/2 track, and 7 denotes a phase compensating circuit for operating stably a position control system.

Numeral 8 denotes a servo control signal selecting circuit for changing the position control system and for outputting a required signal into a VCM driver, and 9 denotes the VCM driver for supplying an operating current to a voice coil motor (hereinafter, referred as to VCM) for moving both the servo head and a read/write head.

Numeral 10 denotes a CPU for controlling the offset signal generating circuit 5 and the servo control signal selecting circuit 8, SW denotes a switch for indicating a mode for writing data-surface servo information, 11 denotes a travel distance detecting circuit for detecting travel distance of the servo head on the basis of the signal output by the position signal generating circuit 4, and 12 denotes a travel speed detecting circuit for detecting travel speed of the servo head on the basis of the position signal generating circuit 4.

Numeral 13 denotes a desired speed signal generating circuit for outputing signal indicating a desired travel speed which causes the servo head to be displaced for the shortest period, and 14 denotes a speed error detecting circuit for outputing a signal indicating a speed error of the servo head detected as a result of comparing the travel speed detecting circuit 12 with the desired speed signal generating circuit 13.

Moreover, numeral 15 denotes a synchronizing signal detecting circuit for detecting a synchronizing signal from the servo-surface read out signal output by the amplifier 2, 16 denotes a PLL circuit for synchronizing and ocsillating a required frequency from the read out signal in accordance with the rotation of the servo surface, 17 denotes a data surface servo information generating circuit for generating servo information recorded on the data surface by separating desirably the output of PLL, and 18 denotes a write data selecting circuit for selecting either one of servo information and normal data for writing on the data surface.

Numeral 19 denotes an index pulse generating circuit for generating an index pulse for data-surface servo information from the servo-surface read out information, 20 denotes a sector pulse generating circuit for generating a sector pulse for data-surface servo information, 21 denotes a write-indicating signal generating circuit for generating a signal for defining the starting timing of writing servo information on the data surface in association with the index pulse and the sector pulse, and 22 denotes a write control circuit for controlling the write of data-surface servo information in accordance with the signal sent from the write-indicating signal generating circuit 21. This write control circuit controls to write a normal data when the write indication is indicating.

This embodiment provides a mode in which any number of sector servo data can be written on the data surface by itself.

For example, CPU indicates to the sector pulse generating circuit the number of the sectors generated in one rotation by selecting the number of generated sector by eight bits of switch $SW_2$ (0 - 7) shown in Fig. 1.

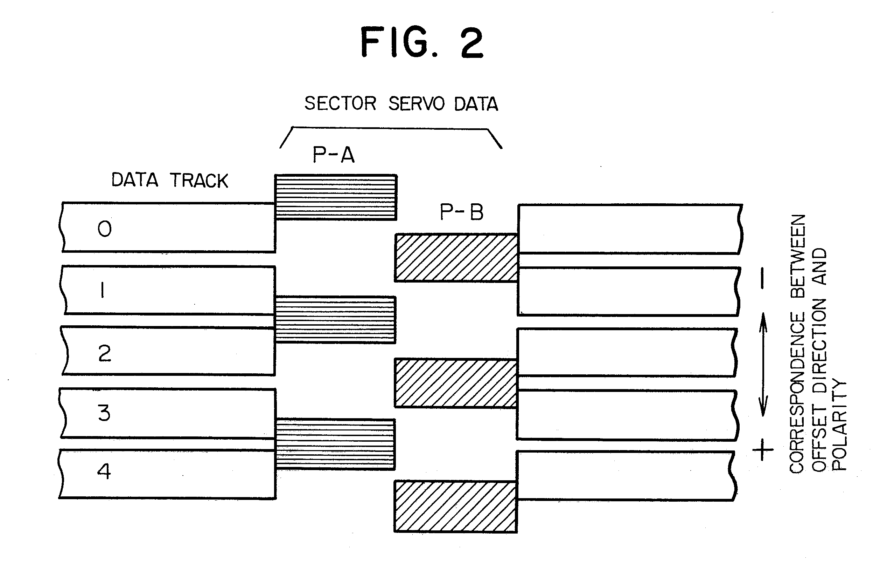

Fig. 2 is a view for describing the sector servo data to be written by a read/ write head of this embodiment.

When an initialize mode is selected by the switch SW, the apparatus of this embodiment writes new sector servo data on the data surface after the read/write head erases the overall data surface.

Thus, when new sector servo data is written, the overall data surface must be erased before the new sector servo data is written thereon, since some crosstalk for the new data may be caused by the previous sector servo data.

At first, all the tracks are erased from the track 0 to the final track N in sequence without providing any offset.

Next, after an offset corresponding to +1/2 track is given to the read/write head, all the tracks are also erased from the tracks N to 0. In Fig. 2, "+" means an offset provided in the inner circumferential direction and "-" means that provided in the outer circumferential direction.

And, after an offset corresponding to -1/2 track is given in a cylinder 0, all the tracks are erased. This process should be done in association with all the read/write heads in the cylinder 0.

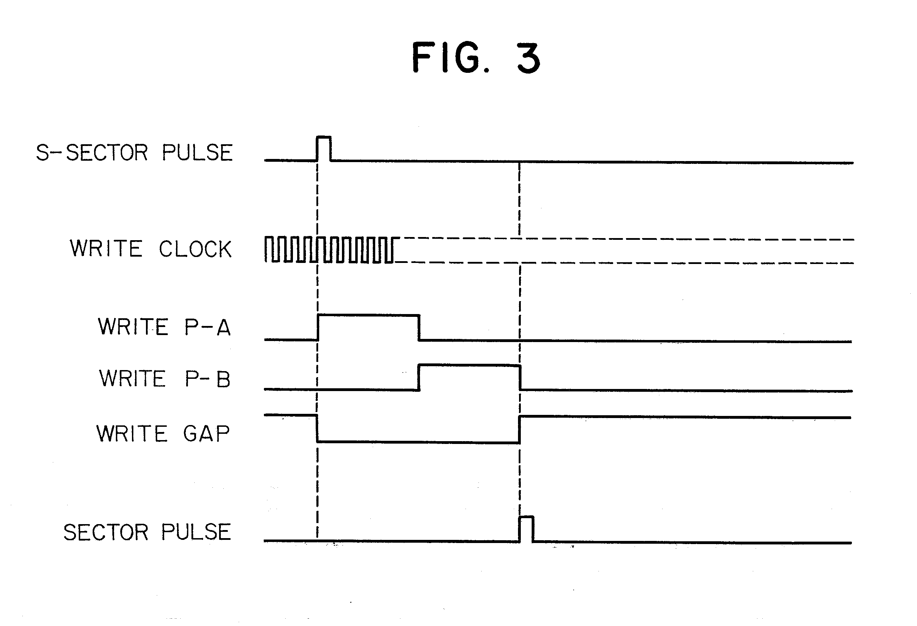

With reference to Fig. 3, a description will be directed to writing sector servo data.

This embodiment employs a specific pulse referred as to an S-sector pulse. This pulse is a pulse which precedes by the duration of sector servo data P-A and P-B in comparison with the normal sector pulse.

This S-sector pulse is used in writing sector servo data.

Tracking control against the data format employs the normal sector pulse.

At first, the pattern "0" is written on all the portions where the write gap of the read/write head is enabled. This writing is done from the tracks 0 to N without providing any offset.

Next, after providing the read/write head with an offset corresponding to +1/2 track, the sector servo data P-B is writtern on all the read/write heads in accordance with the timing of the write P-B. At this time, the pattern of the sector servo data is not particularly defined.

Next, after providing the read/write head with an offset corresponding to -1/2 track, the sector servo data P-A is written on all the read/write heads in accordance with the timing of the write P-A. Then, an offset mode is released.

Then, the similar process is repeated until the track 0 by seeking each two tracks.

This embodiment can write any sector servo data on the overall data surface in accordance with the process described above.

This is done when the data format is changed, namely, when the initialize mode is selected by the switch SW for switching a mode as well as when an initial seek is completed immediately after turing on the power and the servo head is positioned at the cylinder 0.

When an initialize mode is not selected by the switch SW, the drive-ready state is maintained upon completion of an initial seek.

Next, a description will be directed to the method for positioning the read/write head on a track by the servo-surface servo data (two phases) written on the servo surface.

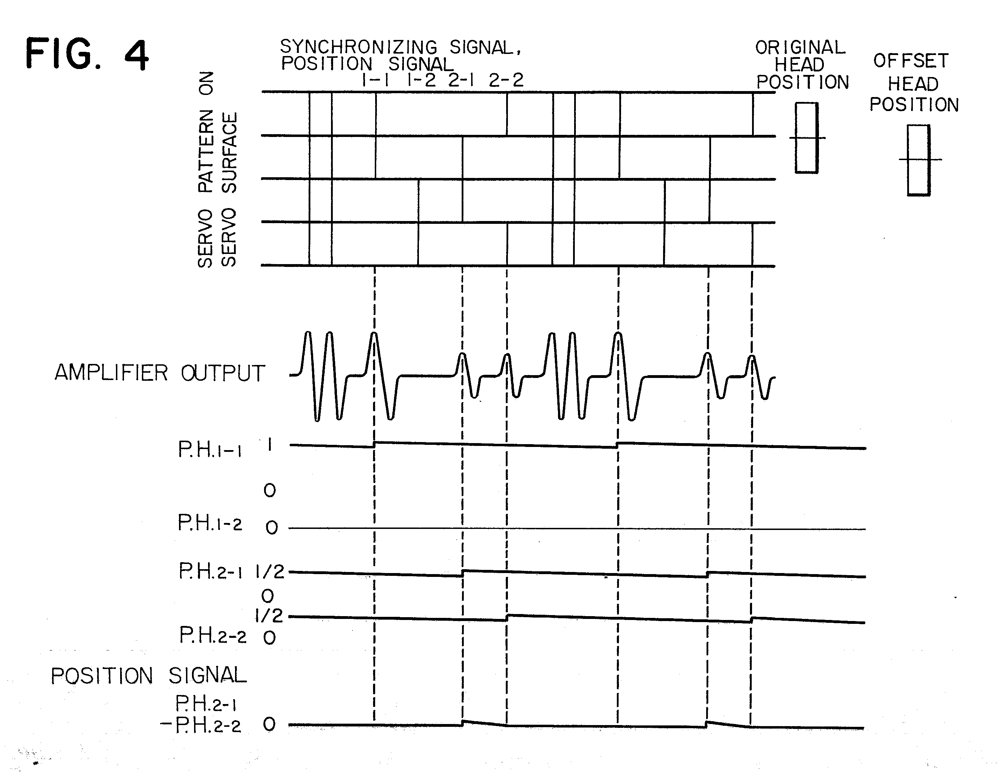

As shown in Fig. 4, the peak-hold circuit 3 serves to hold each peak level of servo patterns 1-1, 1-2, 2-1 and 2-2 in the read-out signal. The position signal is generated by the difference between the peak levels (hereinafter, referred as to PH).

Thus, the position signal is generated by (PH2-1) - (PH2-2) or (PH1-1) - (PH1-2). Then, the current is flown through the VCM so that the position of the servo head is arranged to bring these differences to 0.

In Fig. 4, the servo head is positioned at the site where (PH2-1) - (PH2-2) is 0.

When the servo head is positioned at the middle point of the normal position, the read/write head writes the servo data at the position slipped from the data track by 1/2 track.

A description will be directed to one example of the method for offsetting the servo head by 1/2 track with reference to Fig. 1.

At first, in the offset signal generating circuit 5, the offset amount corresponding to -1/2 track is generated and then is input to the position error detecting circuit 6.

The position error detecting circuit 6 serves to flow the current in the VCM through the VCM driver 9, so that the position of the servo head is arranged to bring the position signal plus the offset amount to 0. The servo head is moved to the offset position as shown in Fig. 4. When PH2-1 value is 3/4 and PH2-2 value is 1/4,

(PH2-1) - (PH2-2) = 3/4 - 1/4 = 1/2 can be obtained and the position signal indicates 1/2 track.

If the offset amount corresponding to + 1/2 track is generated in the offset signal generating circuit 5, the servo head is offset only by -1/2 track.

Another method can be provided for offsetting the servo head by 1/2 track.

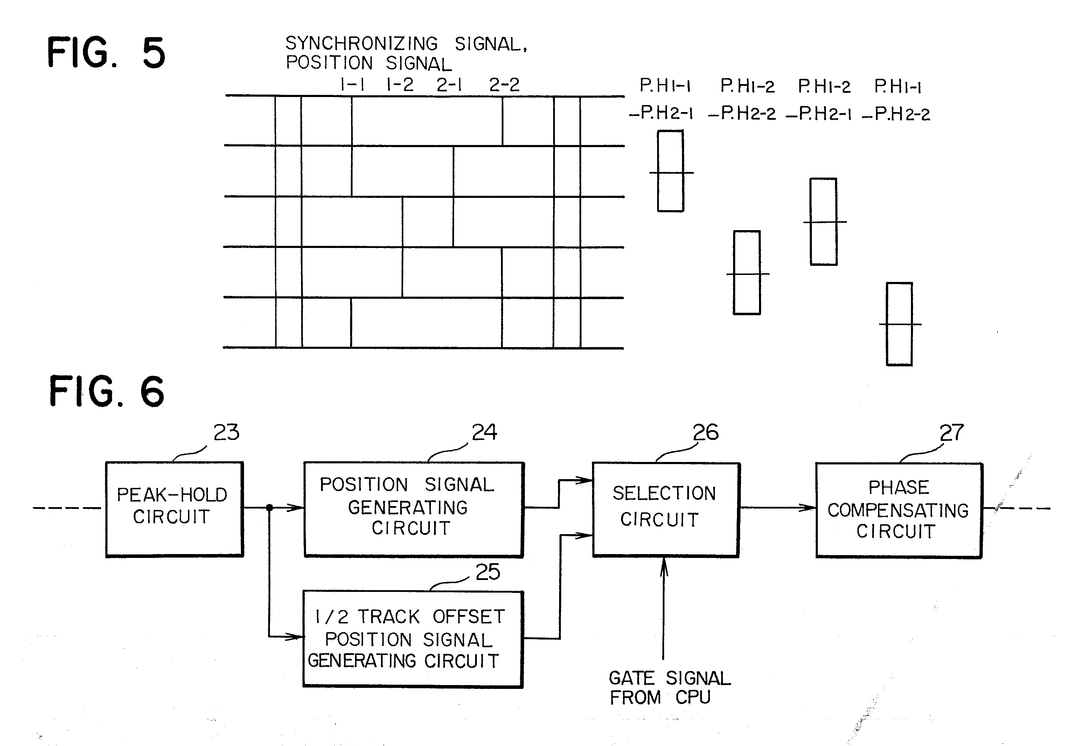

The normal position signal has been created by (PH1-1) - (PH1-2) or (PH2-1) - (PH2-2), as stated before. However, in case of creating this signal by (PH1-1) - (PH2-1), (PH1-2) - (PH2-2), (PH1-2) - (PH2-1) and (PH1-1) - (PH2-2), and flowing the current in the VCM through the VCM driver 9 for arranging the position of the servo head to bring this value to 0, the servo head is positioned at the site slipped by 1/2 track from the normal site as shown in Fig. 5.

Fig. 6 shows a circuit example provided in case of employing this method.

In this figure, numeral 23 denotes a pead-hold circuit, 24 denotes a position signal generating circuit, 25 denotes a 1/2 track offset position signal generating circuit, 26 denotes a selection circuit, and 27 denotes a phase compensating circuit.

A description will be directed to one example of the method for creating data-surface servo indormation.

Since the data-surface servo information needs burst data only, nothing except the circuit for generating the same frequency is required to be provided.

As shown in Fig. 4, the servo data contains a component for indicating the position at constant period. When this component is detected and then is input to PLL16, this PLL16 oscillates at a constant frequency, so that the data-surface servo information may be created from the output of PLL 16.

Moreover, the data-surface servo information can be prepared by the output signal of an exclusive oscillator for a constant frequency.

Normally, since the data transferred from a magnetic disk controller is written on the data surface, it is necessary to provide a selection circuit for selecting that data and the data-surface servo information and transmitting them to the read/write head in order to write the data-surface servo information on the data surface. In this embodiment, the write data selecting circuit 18 is used for this selection circuit.

This write data selecting circuit 18 selects the data-surface servo information by a data-surface servo information wtite control signal S transferred from CPU 10.

Furthermore, in this embodiment, the write mode of the data-surface servo information is indicated by the operation of the switch SW. The other method for indicating the information by means of the command from the magnetic disk controller can be provided.

In this embodiment, the apparatus can write any sector servo data on the data surface by itself, so that the servo data on the data surface does not remain fixed in the shipping step from a factory.

The embodiment is directed to the case for applying the present invention to the sector servo system magnetic disk apparatus, but the present invention can be also applied to the index servo system magnetic disk apparatus.

As described above, the magnetic disk apparatus of the present invention can write any positioning information on the data surface by itself in accordance with the specified mode and the number of the sector pulse, so that a large area to be formatted on the data surface can be obtained.

**Claims**

1. A magnetic disk apparatus for positioning a read/write head by using both a servo-surface servo and a data-surface servo, comprising:
means for preparing a positioning information used for writing a data-surface servo information in accordance with the signal read out from a servo surface by a servo head;
means for positioning said read/write head at a predetermined position in accordance with said positioning information;
means for preparing said data-surface servo information in accordance with the signal read out from said servo surface;
means for writing said data-surface servo information in said data surface by using said read/write head;
means for indicating a writing of said data-surface servo information;
means for indicating the number of data-surface servo information to a track positioned on said data surface; and
means for generating a signal for determining a write starting timing of said data-surface servo information in accordance with the signal read out from said servo surface and the signal from said means for indicating the number of said data-surface servo information.

2. The magnetic disk apparatus of claim 1, wherein said means for preparing a positioning information generates a signal for slipping out said read/write head by 1/2 track from a track pitch.

3. The magnetic disk apparatus of claim 1, wherein said means for writing said data-surface servo information generates said write starting signal by a counter started by an index signal sent from a spindle motor.

4. The magnetic disk apparatus of claim 1, wherein said means for preparing said data-surface servo information prepares said data-surface servo information by using an exclusive oscillator.

FIG. 1

# FIG. 2

SECTOR SERVO DATA

P-A

DATA TRACK

P-B

0

1

2

3

4

CORRESPONDENCE BETWEEN
OFFSET DIRECTION AND
POLARITY

−

+

0285452

# FIG. 3

S-SECTOR PULSE

WRITE CLOCK

WRITE P-A

WRITE P-B

WRITE GAP

SECTOR PULSE

# FIG. 4

SERVO PATTERN ON SERVO SURFACE

SYNCHRONIZING SIGNAL, POSITION SIGNAL
1-1 1-2 2-1 2-2

ORIGINAL HEAD POSITION

OFFSET HEAD POSITION

AMPLIFIER OUTPUT

P.H.1-1  1  0

P.H.1-2  0

P.H.2-1  1/2  0

P.H.2-2  1/2  0

POSITION SIGNAL
P.H.2-1 −P.H.2-2  0

## FIG. 5

SYNCHRONIZING SIGNAL,
POSITION SIGNAL

1-1  1-2  2-1  2-2

P.H1-1   P.H1-2   P.H1-2   P.H1-1

−P.H2-1  −P.H2-2  −P.H2-1  −P.H2-2

## FIG. 6

PEAK-HOLD CIRCUIT — 23

POSITION SIGNAL GENERATING CIRCUIT — 24

1/2 TRACK OFFSET POSITION SIGNAL GENERATING CIRCUIT — 25

SELECTION CIRCUIT — 26

PHASE COMPENSATING CIRCUIT — 27

GATE SIGNAL FROM CPU